(19) Europäisches Patentamt
European Patent Office
Office européen des brevets

(11) **EP 1 461 600 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(21) Anmeldenummer: **02793016.3**

(22) Anmeldetag: **14.12.2002**

(51) Int Cl.:
**G01N 21/64** (2006.01)

(86) Internationale Anmeldenummer:
**PCT/EP2002/014275**

(87) Internationale Veröffentlichungsnummer:
**WO 2003/056309 (10.07.2003 Gazette 2003/28)**

(54) **VERFAHREN ZUR IDENTIFIKATION VON FLUORESZIERENDEN, LUMINESZIERENDEN UND/ODER ABSORBIERENDEN SUBSTANZEN AUF UND/ODER IN PROBENTRÄGERN**

METHOD FOR IDENTIFYING FLUORESCENT, LUMINESCENT AND/OR ABSORBING SUBSTANCES ON AND/OR IN SAMPLE CARRIERS

PROCEDE POUR IDENTIFIER DES SUBSTANCES FLUORESCENTES, LUMINESCENTES ET/OU ABSORBANTES SUR ET/OU DANS DES SUPPORTS D'ECHANTILLONS

(84) Benannte Vertragsstaaten:
**AT BE BG CH CY CZ DE DK EE ES FI FR GB GR IE IT LI LU MC NL PT SE SI SK TR**

(30) Priorität: **03.01.2002 DE 10200499**

(43) Veröffentlichungstag der Anmeldung:
**29.09.2004 Patentblatt 2004/40**

(73) Patentinhaber: **CARL ZEISS JENA GmbH**
**07745 Jena (DE)**

(72) Erfinder:
• **GLUCH, Martin**
**07743 Jena (DE)**
• **WOLLESCHENSKY, Ralf**
**07743 Jena (DE)**

(56) Entgegenhaltungen:
EP-A- 0 723 146     WO-A-00/58715
WO-A-01/02846     WO-A-99/12018
DE-A- 19 748 211

• **LANSFORD R ET AL: "RESOLUTION OF MULTIPLE GREEN FLUORESCENT PROTEIN COLOR VARIANTS AND DYES USING TWO-PHOTON MICROSCOPY AND IMAGING SPECTROSCOPY" JOURNAL OF BIOMEDICAL OPTICS, SPIE, BELLINGHAM, WA, US, Bd. 6, Nr. 3, Juli 2001 (2001-07), Seiten 311-318, XP001117891 ISSN: 1083-3668**

**Beschreibung**

**1. Einleitung**

Die Erfindung bezieht sich auf ein Verfahren für die Identifikation chemisch aktiver Substanzen die sich auf oder in Probenträgern befinden. Durch die simultane Aufnahme kompletter Spektralbänder eröffnen sich neue Möglichkeiten aktiver chemische Substanzen von falsch positiven Störsignalen zu diskriminieren. Dies ist insbesondere bei Anwendungen die einen hohen Probendurchsatz erfordern (High Throughput Screening, Diagnostik) von großer Bedeutung.

*Mikroplatten*

In der chemischen Analytik hat sich die Mikrotiterplatte als Standard Probenträger für die Analyse von Proben etabliert. Exemplare mit 96, 384 oder 1536 Vertiefungen (Wells) erlauben es eine entsprechende Anzahl von Proben simultan zu präpariern und zu analysieren. Das Format dieser Probenträger ist durch den sogennanten SBS Standard festgelegt (www.sbs.org)

*Assays*

Neben dem Handling der Proben (Zugabe der Lösungen, Mischen, Inkubation) ist die Analyse der chemischen Reaktion ein wichtiger Punkt. Es gibt eine Vielzahl unterschiedlicher optischer Parameter die als Messgrößen hier zur Anwendung kommen. Insbesondere in der pharmazeutischen Wirkstofforschung existieren eine Vielzahl unterschiedlicher Analyseprozeduren (Assays) . Als physikalische Messgrössen dienen zum Beispiel Fluoreszenzintensität (FL), Fluoreszenzpolarisation (FP), Fluoreszenz-Energietransfer (FRET), Fluoreszenzlebensdauer (FLD) Lumineszenz (LUM), Absorption (ABS) Eine Übersicht über unterschiedliche Assay Formate findet sich in "High Throughput Screeening: the discovery of bioactive substances", ed. John P. Delvin, Marcel Dekker Inc. 1997 Kap. 15. Beispiele spezieller Assays sind in den Kapiteln 17, 18, 19, 22, 23 und 24 beschrieben.

*Simultane Messung mehrerer Wellenlängen*

In einfachen Assays wird bei einer Wellenlänge gemessen und ausgewertet. Es gibt allerdings auch Formate in denen mehrere Wellenlängen zur Analyse notwendig sind.
Ein Beispiel hierfür sind:

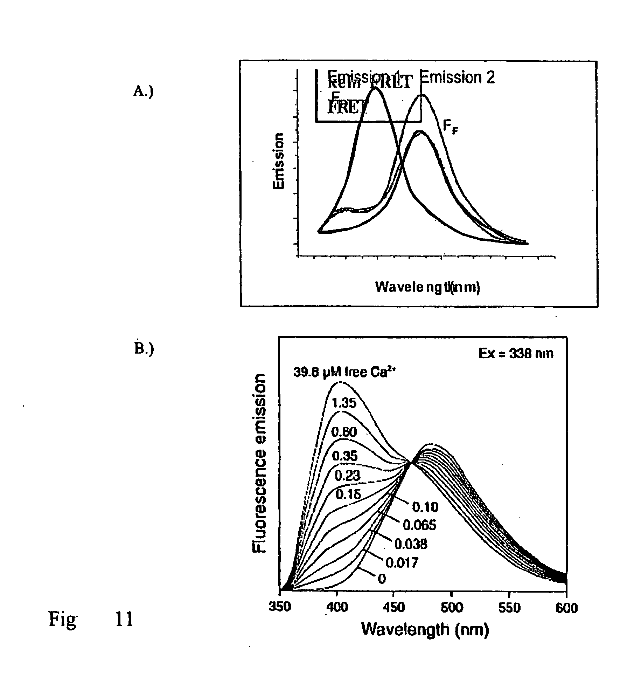

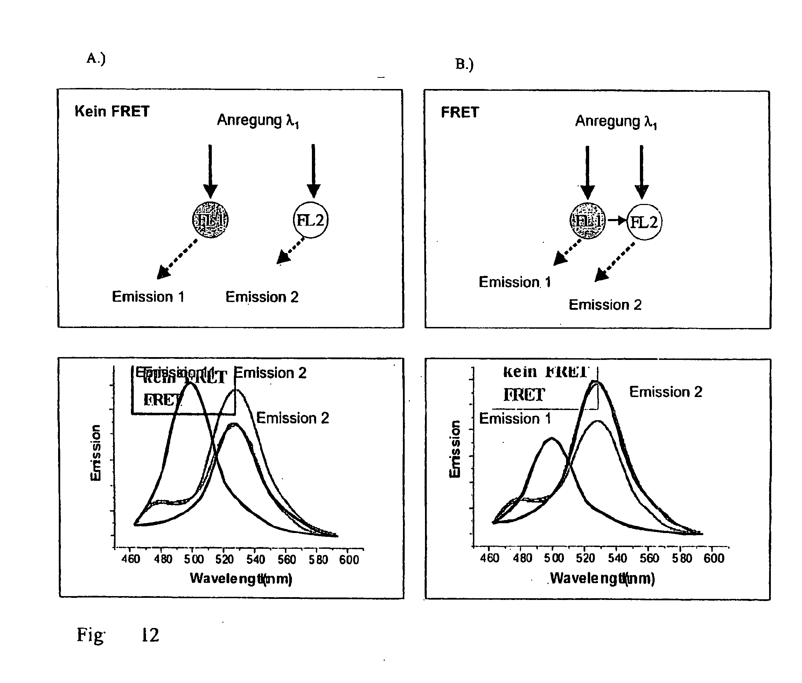

1. Ratio Imaging
Die Reversible Interaktion mit dem spezifischen Bindungspartner (Liganden wie z.B.: $Ca^{2+}$, $Mg^{2+}$, $H^+$) resultiert in einer spektralen Verschiebung der Fluoreszenzemission dieser Farbstoffe (Indo-1, SNARF; Molecular Probes Inc. Siehe Abb. 11b). Zu dem zu einem gegebenen Zeitpunkt im Beobachtungsvolumen gemessenen Emissionsspektrum tragen in der Regel zwei Zustände des Farbstoffs, FF (freier Farbstoff) und FB (Farbstoff mit gebundenem Liganden) (Abb. 11a) bei, deren relative Anteile in einem gegebenen Volumen wiederum von der Affinität zwischen Farbstoff und Ligand, beschrieben durch die Dissoziationskonstante (KD), gekennzeichnet ist. Damit ist das Verhältnis der Fluoreszenzen von FF und FB ein Maß für die Konzentration des Liganden.
2. FRET
FRET (Fluoreszenz Resonanz Energie Transfer) ist der strahlungslose Transfer von Photonenenergie von einem angeregten Fluorophor (dem Donor) an einen anderen Fluorophor (den Akzeptor). Voraussetzung sind u.a. Überlappungen der Donor-Emissions- und Akzeptor-Anregungsspektren und enge räumliche Assoziation von Donor und Akzeptor. In biomedizinischen Anwendungen wird der FRET-Effekt z.B dazu genutzt Ionen-oder Metabolitkonzentrationen ($Ca^{2+}$, cAMP, cGMP) oder andere z.B. liganden-abhängige Strukturveränderungen (z.B. Phosphorylierungszustand von Proteinen, Konformationsänderungen von DNA) zu bestimmen und zu verfolgen. Dies gelingt durch Kopplung der FRET-Partner, Donor und Akzeptor (z.B. die synthetischen Fluorochrome FITC und Rhodamin oder die genetisch kodierten fluoreszierenden Proteine CFP und YFP) an ein Molekül, das durch die spezifische Interaktion mit dem zu beobachtenden Ionen, Metaboliten oder Liganden Veränderungen in seiner Sekundärstruktur erfährt (Beispiel Miyawaki et al.; Proc Natl Acad Sci USA 96, 2135-2140, (March 1999); siehe Abb 13) oder an je eines von zwei Molekülen, die permanent oder in Abhängigkeit von Umgebungsbedingungen interagieren. Abb. 12 zeigt das Emissionsspektrum für die FRET Partner für unterschiedliche Abstände zwischen Donor und Akzeptor (a - großer Abstand kein FRET / b - kleiner Abstand FRET Wechselwirkung). In beiden Fällen sind Unterschiede in den Anteilen des freien und liganden-gebundenen FRET-Systems im Beobachtungsvolumen mit spektralen Unterschieden in der Fluoreszenzemission des FRET-Systems verbunden. Bei bevorzugter Anregung der Donorfluoreszenz drücken sich Zunahmen oder Abnahmen der Ligandenbindung in gegenläufigen Veränderungen der Amplituden der Fluoreszenzemissionen der beiden FRET-Partner aus
3. Homogenous Time Resolved Fluorescence

Auch.hier wird das Verhältnis zweier Wellenlängen (hier 620 bzw 665 nm) für die Messung des Signals verwendet eine Beschreibung findet sich in "High Throuput Screeening: the discovery of bioactive substances", ed. John P. Delvin, Marcel Dekker Inc. 1997 Kap. 19

**1.4 High Troughput Screening**

Als Ausgangspunkt für die Entwicklung eines neuen Medikamentes in der pharmazeutischen Wirkstofforschung wird eine chemisch aktive Substanz gesucht, die mit einem spezifischen biologischen Molekül interagiert. Diese Substanz dient dann der für die weitere Optimierung bis hin zum Medikament. Der Nachweis der Interaktion erfolgt über einen Assay, mit dem die Reaktion über ein physikalisch messbares Signal nachgewiesen werden kann. Im sogenannten primären Screening werden unterschiedliche Substanzen (bis zu mehreren hunderttausend) im Assay auf ihre Aktivität hin untersucht. Ziel ist es die Substanzen mit der größten Aktivität zu selektieren. Gemessen wird die Aktivität nicht als absoluter Wert sondern relativ zur Aktivität einer bekannten Substanz die man als Standard oder auch 100% Kontrolle bezeichnet. Eine Ähnliche Vorgehensweise liegt auch in der Diagnostik vor - anstelle der Substanzen aus Substanzbibliotheken werden hier Patientenproben in eine Assay auf bestimmte Krankeitsparameter hin untersucht.

**1.5 Qualität der Messwerte**

Wesentlich für die oben beschriebenen Prozesse ist das die Messung stets auf eine Kontrollsubstanz bezogen wird. Um Fehlergebnissse aufgrund von Veränderungen bei der Prozessführung zu vermeiden, werden diese Kontrollen bei jedem Assay mitgemessen, z.B indem man einigen Wells der Mikroplatte diese Kontrollen zugibt.
Das gemessene Signal wird auf folgende Weise in eine relative Signalstärke umgerechnet:

$$\text{Relatives Signal Substanz} = (\text{gemessenes Signal Substanz} - \text{gemessener Untergrund}) / (\text{gemessenes Signal Standard} - \text{gemessener Untergrund}).$$

Der Untergrund ist eine Messung des Signals in der Lösung wenn keine Substanz oder Kontrolle beigefügt ist (Leermessung). Für diese Leermessung gilt das gleiche wie für die Standards, daß sie bei jedem Assay bestimmt werden, z.B indem man entspechende Wells auf der Mikroplatte dafür verwendet.
Für die Praxis ist es erstrebenswert einen möglichst großen nutzbaren Meßbereich zwischen dem Untergrundsignal (welches die Nachweisgrenze definiert) und dem Signal der Kontrolle zu erzielen. Ein wesentliches Merkmal für die Qualität eines Assays ist die Spezifität der Nachweisreaktion, Je spezifischer der Assay ist umso weniger falsch positiv / negative Resultate werden erzielt. Ein falsch positives Signal ist wenn das gemessene Signal positiv ist aber keine Reaktion stattfand. Dies kann z.B. bei einem FL Assay der Fall sein wenn die untersuchte Substanz
Eigenfluoreszenz aufweist, oder bei einem ABS Assay wenn die Substanz farbig ist. Ein falsch negatives Signal ist der Fall , wenn kein Signal gemessen wurde, aber eine Reaktion stattfand. Auch hier können die physio-chemischen Eigenschaften der einzelnen Proben die Ursache sein.

**1.6 Mikroplatten Reader**

Zur Detektion der physikalischen Messgrößen des Assays werden sogenannte Mikroplatten Reader verwendet. Diese Geräte sind von ihrem Aufbau Photometern bzw Fluorometern vergleichbar, die jeweils ein weil in Durchlicht oder Auflicht beleuchten und den Messwert mittels eines lichtempfindlichen Sensors registrieren.
Die Selektion des für die Untersuchung spezifischen Wellenlängenbereiches erfolgt mittels Farb oder Interferenzfiltern. Für die simultane Detektion von mehreren Wellenlängen werden diese sequenziell gemessen. Die zugehörige Wellenlänge wird durch ein wählbares Bandpassfilter realisiert. Alternativ hierzu werden mehrere Detektoren verwendet bei denen ein dichromatischen Teilerspeigel jeweils den entsprechende Wellenlängenbereich pro Detektor selektiert (siehe in "High Throuput Screeening: the discovery of bioactive substances", ed. John P. Delvin, Marcel Dekker Inc. 1997 S. 357). Der Nachteil der obengenannten Methoden besteht darin das die Zahl der wählbaren Detektionsbänder und deren Bandbreite durch die verwendeten Filter vorgegeben ist und das Messungen von mehr als zwei Wellenlängenbändern zeitaufwendig werden. Insbesondere bei der Messung von Reaktionskinetiken ist eine kurze Meßzeit von Vorteil. Bei verschiedenen Farbstoffen mit überlappenden Wellenlängenbereichen muss nach dem Stand der Technik die Bandbreite des Detektionsfilters sehr schmal gewählt werden um das Übersprechen der benachbarten Signalle möglichst klein zu halten.

Die Folge ist dass die Intensität des detektierten Signals aufgrund der kleinen Bandbreite sehr gering ist.

Zur freien Wahl der Anregungs und Emissionsbereiche gibt es auch Reader die mit einem Gittermonochromator versehen sind, der es je nach Anordnung ermöglicht die Wellenlänge des Anregungs oder Emissionslichtes frei zu wählen. Mit diesen Anordnungen läßt sich pro Well ein Spektrum des detektierten Lichtes aufzeichnen. Allerdings ist auch dieser Prozess sequenziell aufgrund des Scanvorganges des Monochromators.

In DE 19748211 A erfolgt eine parallele Beleuchtung und Detektion über ein CCD Array in einem Reader für Mikrotiterplatten.

W00102846 A beschreibt eine Methode zur kapillaren Gelelektrophorese, wobei das Beleuchtungslicht in separate Komponenten aufgeteilt wird, die in Fasern gelangen.

Den einzelnen Wellenlängen werden unterschiedliche Modulationsfrequenzen aufgelegt, um die Wellenlängenanteile bei der Detektion durch Demodulation zu trennen.

In EP-A-0723146 wird das Licht von Laserdioden über Faseroptik vereinigt und eine Detektion erfolgt über mehrere separate Photodetektoren.

## Vorteile des erfindungsgemäßen Verfahrens

Das erfindungsgemäßen Verfahren besitzt gegenüber den bisherigen Verfahren folgende Vorteile:

Durch die erfindungsgemäßen Verfahren können die Anzahl der simultan einsetzbaren Farbstoffsignaturen, d.h. die Anzahl der simultan untersuchbaren Eigenschaften beispielsweise von Zellen erhöht werden. Bei sich stark überlappenden Spektralsignaturen der einzelnen Farbstoffe muß nach dem Stand der Technik der Wellenlängenbereich zur getrennten Detektion der Fluoreszenzsignale einzelner Farbstoffe eingeschränkt werden. Dadurch verringert sich die Empfindlichkeit der Detektion, d.h. zu einem erhöhten Rauschen der Detektoren, da höhere Verstärkungen genutzt werden. Dies wird durch die erfindungsgemäßen Verfahren verhindert. Weiterhin können nichtspezifische Fluoreszenzsignale, Autofluoreszenzen und Fluoreszenzen der Meßvorrichtung absepariert werden.

Das Verfahren erlaubt es mehrere - auch spektral überlappende Emissionsbänder zu definieren, die während der Messung simultan aufgezeichnet werden

Aufgrund der verwendeten spektralen Auflösung lassen sich die spektralen Anteile des detektierten Lichtsignales über einen großen Wellenlängenbereich ermitteln. Dies erlaubt Bestimmung der spektralen Signatur eines spezifischen Farbstoffes. Mischungen von mehreren Farbstoffen lassen sich an Hand der spektalen Signaturen unterscheiden.

Bei jeder Messung werden die Signaturen der Kontrolle und des Untergrundes bei jedem Messablauf mit ermittelt. Bei den gemessenen Probensignalen läßt sich so der spezifische Anteil des gemessenen Signales bestimmen. Unspezifische Beiträge, die zu falsch positiven oder negativen Resultaten führen werden dabei separiert.

## 2 Beschreibung der Erfindung

### 2.1 Verfahren zum Screenen von Wirkstoffen

Hintergrund des erfindungsgemäßen Verfahrens ist eine spektral aufgespaltete Detektion des von der Probe emittierten Lichts, wobei über verschiedenen

Spektralkomponenten summiert wird.

Die besonderen Vorteile der Erfindung bestehen in:

- Der empfindliche Simultandetektion von FL Bändern
- Einer flexiblen Konfiguration der Detektionsbänder
- Der Schnellen Visualisierungsmöglichkeit der Assay - Resultate
- Der möglichen Diskriminierung von Beiträgen aufgrund physio-chemischer Eigenschaften der Compounds bei der Meßwertbildung

### 2.2 Durchführung des Verfahrens

### 2.2.1 Definitonen

Eine MTP definiert ein Koordinatensystem mit unterschiedlichen Probenorten (Koordinaten A1, A2, ...nach SBS Standard). Fig.. 7 zeigt ein Beispiel für eine 96 Well MTP Hier sind Wells der Koordinaten 1-12 bzw. A-H dargestellt, die vom Scanningtisch über die X/Y Positionierung einzeln schnell und hochgenau angefahren werden. Die Koordinaten sind für die Zuordnung zu den gemessenen Proben wichtig. Bei dem erfindungsgemäßen Gerät sind in der Ansteuerung des Scanningtisches die Koordinaten der genormten MTP vorgespeichet.

Auch eine genaue x/ X Positionierung innerhalb eines Wells, hier als H12 beispielhaft dargestellt, ist möglich.

Bei Mehrfachmessungen innerhalb eines Probenortes erhält man sogenannte Sub-Well Daten, die sich durch die gleiche Wellkoordinate aber eine zusätzliche Ortskoordinate auszeichnen, die die Position innerhalb eines Wells definiert. Die Analyse von Sub Welldaten ist von Bedeutung, wenn sich innerhalb eines Wells Inhomogenitäten im zu messenden Signal ergeben die sich mit Hilfe der Auflösung des verwendeten Systems detektieren lassen Diese Inhomogenitäten erlauben Rückschlüsse auf SubPopulationen innerhalb einer untersuchten Gesamtheit (z.B. Zellkulturen oder Ensembles von Beads, o.ä.) . Im folgenden wird auf die Analyse von diesn Sub Populationen nicht weiter eingegangen. Das erfindungsgemäße Verfahren schliesst diese Art der Analyse jedoch mit ein.

Auf der MTP befinden sich Standardproben STD sowie Leerproben (BLK), die weder STD noch zu untersuchende Substanzen enthalten, zur Ermittlung des Untergrundsignales. In den mit PRB gekennzeichneten Bereichen befinden sich die zu untersuchenden Proben

### 2.2.2 Festlegung von Spektralregionen (SRI- Spectral Range of Interest) aus den Spektrum

Bei dem erfinungsgemäßen Verfahren wird in einem ersten Schritt ein Spektrum von der Kontrolle (STD) aufgezeichnet. Das Verfahren zur Aufzeichung von Spekten und Spektralbereichen ist im Detail bei "Beschreibung der Detektionseinheit beschrieben. Das aufgezeichnete Spektrum wird dem Benutzer am Kontroll PC graphisch angezeigt, Nach Aufnahme eines Spektrums in der oben geschilderten Weise kann der Nutzer aus den gesamten Spektrum die für die Untersuchung relevanten interessierenden Spektralbereiche (SRI - Spectral Region of Interest) selektieren. Dieser Prozess wird einmal zu Beginn eines Experiments getan. Im weiteren werden die Messungen mit den festgelegten SRIs durchgeführt.

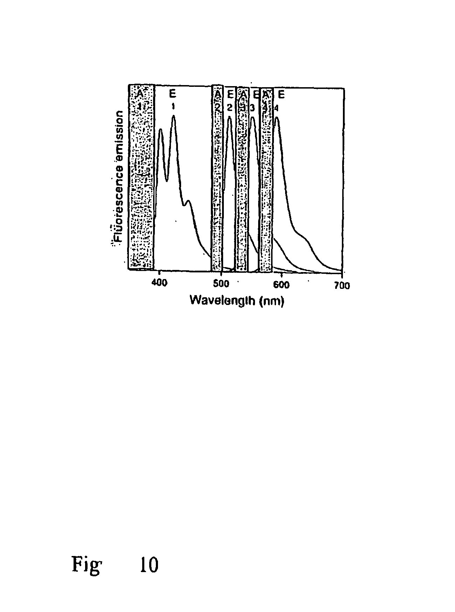

Die Einstellung der SRI durch den Nutzer kann beispielsweise wie folgt geschehen (ABB. 10): Wenn mehr als ein Fluoreszenzfarbstoff verwendet wird, so kann entweder ein Standard alle Fluoreszenzfarbstoffe enthalten, oder es gibt mehrere Standards, die jeweils einen Farbstoff enthalten. Im letzteren Fall erfolgt die Festlegung der SRIs für jeden Standard einzeln. Im folgenden Bespiel sind 4 Farbstoffe in einem STD well vorhanden. Nach der Aufnahme eines Spektralscans unter Verwendung aller notwendigen Anregungsbänder (A1-A4) können Summenkanäle zwischen den einzelnen Anregungsbändern gebildet werden :E1 bis E4 gemäß Fig.10 bis zur maximalen Emissionswellenlänge. Diese Summenkanäle entsprechen Teilen der Fluoreszenzbänder der einzelnen Farbstoffe. Im Falle von Farbstoffen mit stark überlagernden Emissionsbändem lässt sich auf diese Weise nur ein Teil des spektralen Signals nutzen. Je nach Wahl der Bandbreite für die Summation des Emissionslicht hat dies zur Folge das die Empfindlichkeit gering ist oder die Spezifität für einen Farbstoff nicht ausreicht. Eine Weiterentwicklung des erfindungsgemässen Verfahrens zur Diskriminierung von stark überlagenden Fluoreszenz wird weiter unten beschrieben.

Neben einer manuellen Einstellung der Detektionsbänder ist auch eine automatisier Bestimmung der Detektionsbänder indem jeweils von jede einzelne FL Komponente als Referenz in einem MTP well ein Spektrum gemessen wird und die Spektralkomponenten die über der Komparatorschwelle liegen und nicht das Anregungsband der Lichtquelle darstellen für die Detektion ausgewählt werden In einem 2. Verfahren zur Einstellung der verschiedenen SRIs erfolgt eine Vermessung des Fluoreszenzschwerpunktes Hierzu werden im Detektor alle Einzelkanäle, die mit Anregungslicht bestrahlt werden abgeschalten. Jede SRI besitzt aufgrund der veränderten Emissionseigenschaften der jeweils verwendeten Farbstoffe einen charakteristischen Fluoreszenzschwerpunkt.

Somit können die verschiedenen SRIs durch die Lage des charakteristischen Farbschwerpunktes unterschieden und getrennt sichtbar gemacht werden.

Im Anschluß erfolgt wiederum eine spezifisch den Farbstoffeigenschaften angepaßte Einstellung der Summenkanäle für die einzelen SRIs.

Zusätzlich sind beliebige Einzelkanäle auch durch den Nutzer abschaltbar. Dies ist besonders zur Unterdrükkung einer oder mehrerer Anregungbänder sinnvoll.

### 2.2.3 Verrechnung der Messwerte mit Standard und Blank

Bei dem erfindungsgemäßen Verfahren werden die Messwerte nicht als Absolutwerte ermittelt und dargestellt. Die zu bestimmende Größe ist vielmehr die Intensität eines gemessenen Signals relativ zu einer bekannten Referenzprobe und einer Leerprobe.

Standard (STD) und Blanks (BLK) sind festgelegt durch Plattenlayout oder Verwendung von Kalibrier / Referenzplatten zwischen den Assay Plates. Jedem Messwert ist ein Satz von Standard / Blanks zugeordnet. Wir definieren im weiteren als Assay Intensitäten, die Messgröße, welche sich durch Verrechnung von gemessenen Intensitäten ergibt. Ein alternatives Verfahren zur Bestimmung der Assay Intensitäten, das die spektrale Signatur von gemessener Probe und Referenz berücksichtigt ist weiter unten beschrieben

Die oben erwähnten SRI werden vorher anhand der Standards (STD) festgelegt.

Definition: Assay-Intensitäten = (PRB-BLK) / (STD-BLK). STD, PRB, BLK können Einzelmessungen oder Mittelwerte aus Mehrfachmessungen darstellen

## 2.2.4 Simultane Messung mehrerer SRIs

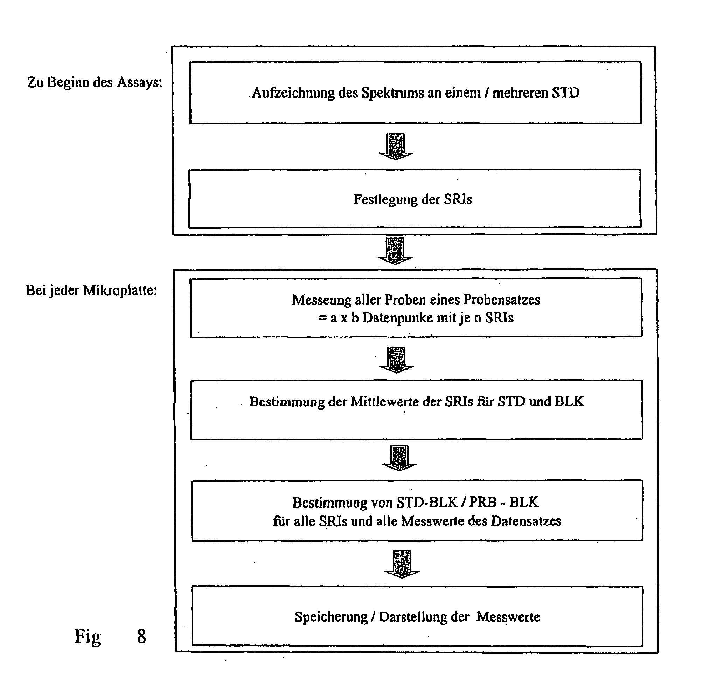

In Fig. 8 ist ein Meß- und Berechnungsablauf schematisch dargestellt.

Zu Beginn des Experiments werden die SRIs festgelegt. Das Verfahren hierzu ist unter "Festlegung von Spektralregionen" beschrieben.

Im Weiteren werden von jeder Mikroplatte die Messwerte in den einzelnen Wells bezüglich der SRIs bestimmt. Von den Messwerten der BLK und STD Wells werden die Mittelwerte bestimmt (wenn mehrere vorhanden sind)

Die Messwerte der Proben für die einzelnen SRIs werden mit den Mittelwerten von STD und BLK verrechnet

Die Daten werden am PC dargestellt und / oder abgespeichert

Eine Nutzung des hier beschriebenen Verfahrens bei ratiometrischen Verfahren z.B. für FRET-Messungen (siehe oben) besteht darin, die Probe mit Licht nahe dem Anregungsoptimum des FRET-Partners 1 (Donoranregung) zu bestrahlen. Der am Multikanaldetektor erfasste Spektralbereich umfasst die Emissionsbereiche beider FRET-Partner durch Definition von SRIs mit den entsprechenden STD Proben in der MTP (siehe oben) kann das Verhältnis von Donor und Akzeptor emission simultan gemessen werden.

## 2.2.5 Unmixing

Durch die Verwendung von Kontrollen auf den Mikroplatten ist die Information über den spektralen Verlauf des zu messenden Signals bei jedem Experiment verfügbar.

Im folgenden werden Verfahren beschrieben, die dazu dienen mit Hilfe dieser Information unspezifische Anteile des zu messenden Signals zu unterdrücken, bzw Messwerte von Spektren, die sich überlagern zu trennen.

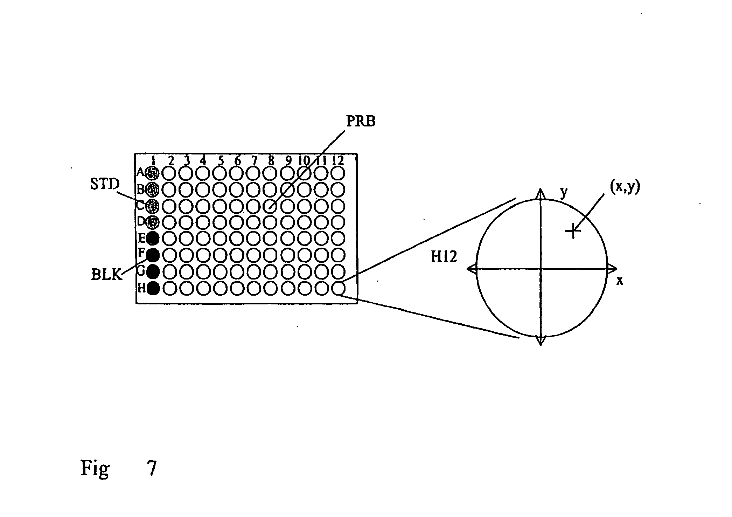

Algorithmen zur Analyse, z.B. zur selektiven Darstellung der Beiträger einzelner Farbstoffe zum gesamten von der Probe abgestrahlten Fluoreszenzsignal werden im folgenden beschrieben. Die Analyse kann quantitativ oder qualitativ erfolgen. Bei einer quantitativen Analyse wird pro Well der Beitrag (d.h. die Konzentration) jedes einzelnen Farbstoffs zum gesamten von der Probe abgestrahlten Fluoreszenzsignal berechnet. Zum Einsatz kommen Algorithmen wie z.B. eine lineare Entmischungsanalyse (Lit.: Lansford, et al.; Journal of Biomedical Optics 6(3), 311-318, (July 2001)). Die zur Analyse benötigten Referenzspektren die das Fluoreszenzspektrum eines einzelnen Farbstoffs beschreiben, werden aus den Kontrollen (STD siehe Abb. 7) ermittelt, die sich auf der MTP befinden.

Bei einer qualitativen Analyse erfolgt eine Klassifizierung, d.h. jedem Weil wird jeweils nur der Farbstoff, der den größten Beitrag zum gesamten von der Probe abgestrahlten Fluoreszenzsignals erzeugt, zugeordnet. Verwendet werden hierzu Algorithmen wie z.B. eine principal component analysis (PCA / Lit.: I.T. Joliffe, Principal Component Analysis, Springer-Verlag, New York, 1986.). Diese Art von Algorithmen erlaubt eine Darstellung der Messwerte auf dem Kontroll PC in Form einer Falschfarben - Darstellung eine so genannte Maskierung des Bildes (Farbstoffmaske), wobei sich in Bereichen gleicher Farbe identische Farbstoffe befinden. Diese. Darstellung erlaubt bei der Analyse von (sub-) well daten die Kolokalisation von Farbstoffen am gleichen Ort innerhalb eines Wells

## 2.2.6 Unmixing mit STD und BLK

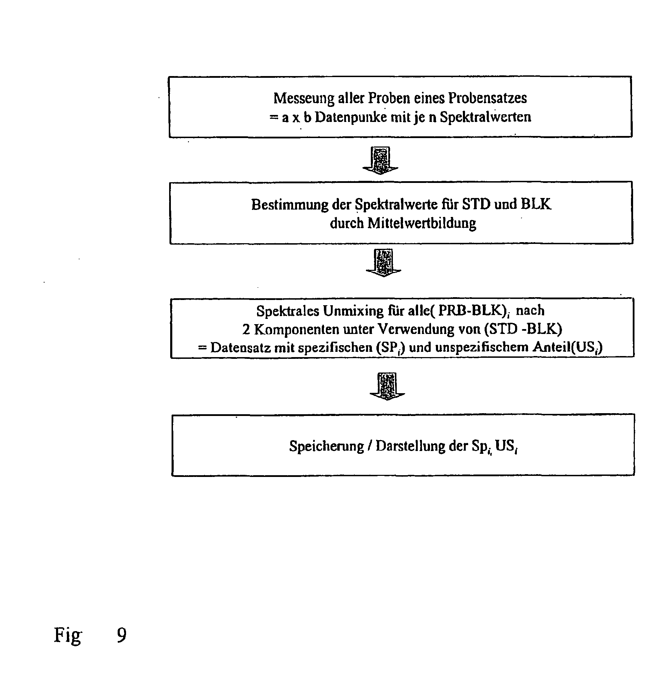

In Fig.9 ist das unmixing nach zwei Komponenten in Detail schematisch dargestellt.

Für jede Mikroplatte werden in den Wells die Spektralwerte bestimmt

Bei den STD und BLK Wells erfolgt eine Mittelwertbildung falls gleichartige Proben vorhanden sind

Unter Verwendung von STD erfolgt dann für jede Probe ein spektrales Unmixing nach zwei Komponenten. Daraus resultiert ein Datensatzes der den spezifischen Anteil SP (= STD-Komponente) und den unspezifischem Anteil US (=Steulicht, Eigenfluoreszenz) enthält

Diese beiden Datensätze können dann dargestellt oder gespeichert werden

## Unmixing zu Detektion von WL Shifts

Eine weitere Anwendung der Unmixing Verfahren liegt bei ratiometrischen Verfahren, wenn sich das Emissionsspektrum des Farbstoffes in Abhängikeit von vorhandenen lonenkonzentrationen oder durch räumliche Nähe zu einem Bindungspartner verändert. Anstelle die Intensität in zwei schmalen Wellenlängen bereichen zu bestimmen und den Quotienten zu bilden lässt sich das Verhältnis beider Komponenten durch Unmixing bestimmen. Der Vorteil der Methode liegt in dem Umstand, das man ein wesentlich stäkeres Signal für die Messung (weil der gesamte Spektralbereich berücksichtigt wird) verwendet. Der unterscheid zum "Unmixing mit STD und BLK" ist das man zwei STD als Referenz verwendet, die jeweils die Extremwerte des Spektrums (gebunden vs frei, bzw ionenreich vs ionenarm) repräsentieren. Das Unmixing liefert dann auch 3 Komponenten 2 spezifische (zu den jeweiligen STDs) und die unspezifische Komponente.

## 2.3 Beschreibung der Anordnung

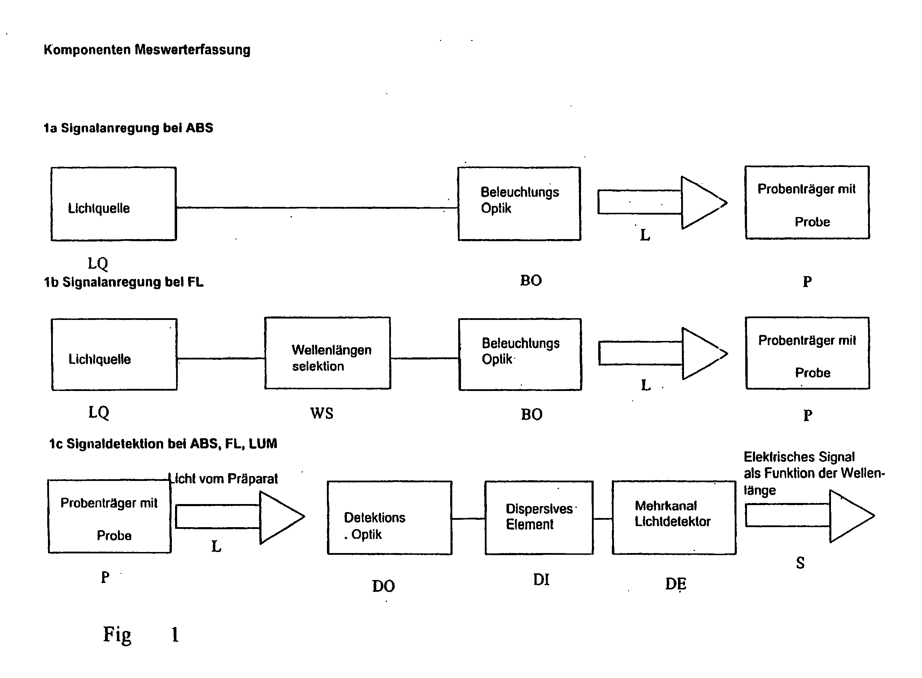

In Fig. 1 sind schematisch die wichtigsten Elemente der Erfindung als Blockschaltbild dargestellt.

Für Absorptionsmessungen (ABS) (1a) wird das Licht L mit einer breitbandigen Lichtquelle Lichtquelle LQ und einer Abbildungsoptik BO in die Probe fokussiert und hinter der Probe detektiert.

Bei Fluoreszenzmessungen (FL) wird die spezifische Anregungswellenlänge mittels eines wellenlängenselektiven Elementes WS aus einer breitbandigen Lichtquelle LQ selektiert und einer Abbildungsoptik BO in die Probe fokussiert (1b).

Die Wellenlängenselektion kann z.B. mit geeigneten Filtern, Prismen, dichroitischen Teilerspiegeln oder auch Kombinationen diese Elemente erfolgen. Alternativ hierzu sind monochromatische Lichtquellen möglich. Beispiele sind Multiline Laser oder die Kombination einzelner Laser in einem Lasermodul. Hier erfolgt die

Wellenlängeriselektion beispielsweise mittels AOTF oder diffraktiver bzw dispersiver Elemente.

Bei Fluoreszenzdetektion (Fig.1b, c) wie auch sinngemäß bei Fig. 1a und 1c für den Absorptionsfall wird das Emissionslicht mit Hilfe eines Elementes zur Trennung der Anregungsstrahlung von der detektierten Strahlung -wie z.B einem dichroitischen Strahlteiler- vom Anregungslicht abgespalten.

Bei Durchlichtanordnungen z.B für Absorptionsmessungen und auch bei Lumineszenzmessungen (LUM) kann ein derartiges Element auch völlig entfallen. Das Licht der Probe wird mit Hilfe einer abbildenden Optik DO auf ein wellenlängendispersives Element abgebildet. Mit Hilfe dieses dispersiven Elements DI wird das Licht in seine Spektralanteile zerlegt. Als winkeldispersive Elemente kommen beispielsweise Prismen, Gitter und akusto - optische Elemente in Frage.

Das vom dispersiven Element in seine spektralen Komponenten aufgespaltete Licht wird im Anschluß auf einen Mehrkanal- Zeilendetektor DE abgebildet. Dieser Zeilendetektor DE mißt also das Emissionssignal in Abhängigkeit von der Wellenlänge und wandelt dies in elektrische Signale S um. Mit Hilfe eines erfindungsgemäßen, im folgenden näher erläuterten Binningverfahrens erfolgt ein Zusammenschalten von einzelnen Kanälen, d.h. eine Summation über einzelne Kanäle des Zeilendetektors.

Zusätzlich kann der Detektionseinheit noch ein Linienfilter zur Unterdrückung der Anregungswellenlängen vorgeschaltet werden.

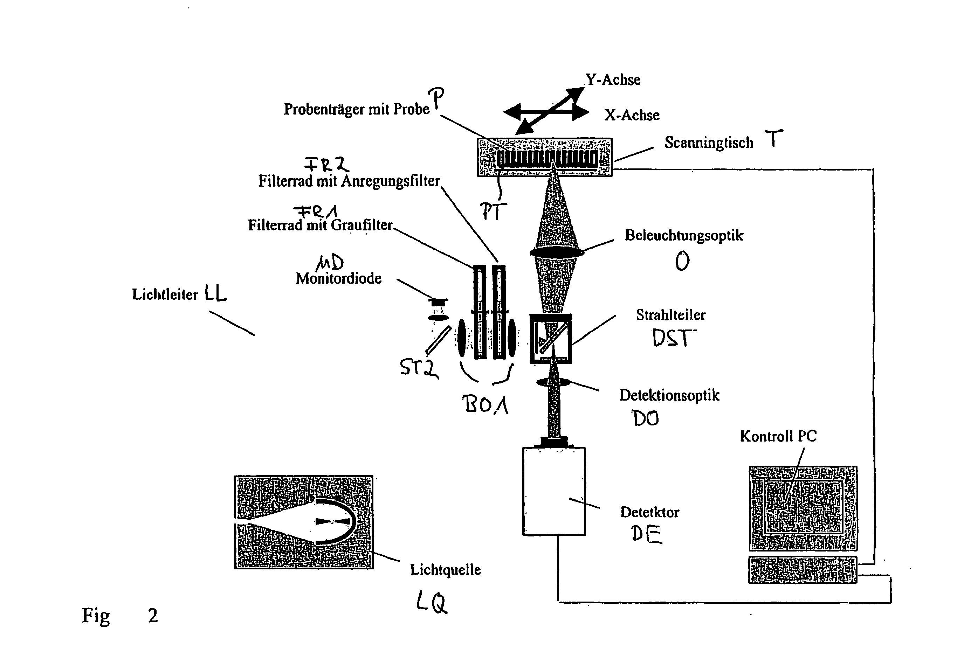

Abb. 2 zeigt ein Ausführungsbeispiel der Gesamtanordnung .

Ein Probenträger PT hält eine Probe P, hier eine Mikrotiterplatte und ist vorzugsweise als Scanningtisch T ausgebildet, d.h. er führt eine schnelle Bewegung mindestens in X/Y Richung aus.

Es erfolgt eine Beleuchtung der MTP von unten durch die Gefäßböden der einzelnen Wells hindurch.

Die Beleuchtung besteht aus einer Lichtquelle LQ, deren Licht hier in einen Lichtleiter LL eingekoppelt wird und über eine erste Beleuchtungsoptik BO1 und Filterräder FR1 zur Intensitätssteuerung über Graufilter und FR2 zur Wellenlängenselektion über Anregungsfiler sowie einen dichroitischen Strahlteiler DST und ein Objektiv O in die Proben P gelangt. Das von den jeweiligen Proben kommende Licht gelangt durch den Strahlteiler DST hindurch über eine Detektionsoptik DO auf einen Detektor DE.

Über einen Strahlteiler ST2 wird ein Teil des Beleuchtungslichtes zu einer Monitordiode MD zur Überwachung der Laserleistung ausgekoppelt.

Es kann pro Probe (im Well der MTP) eine Messung erfolgen oder auch mehrere Messungen in einem Well.

Die Proben P im Probenträger PT werden sequentiell vermessen. Zu diesem Zweck wird der Probenträger PT mit Probe mit einem Scanningtisch T über die optische Anordnung bewegt. Eine alternative Ausführung wäre dass die Probe sich fest in einem Halter befindet und sich die optische Anordnung mittels eines xy Scanners relativ zum Probenträger bewegt.

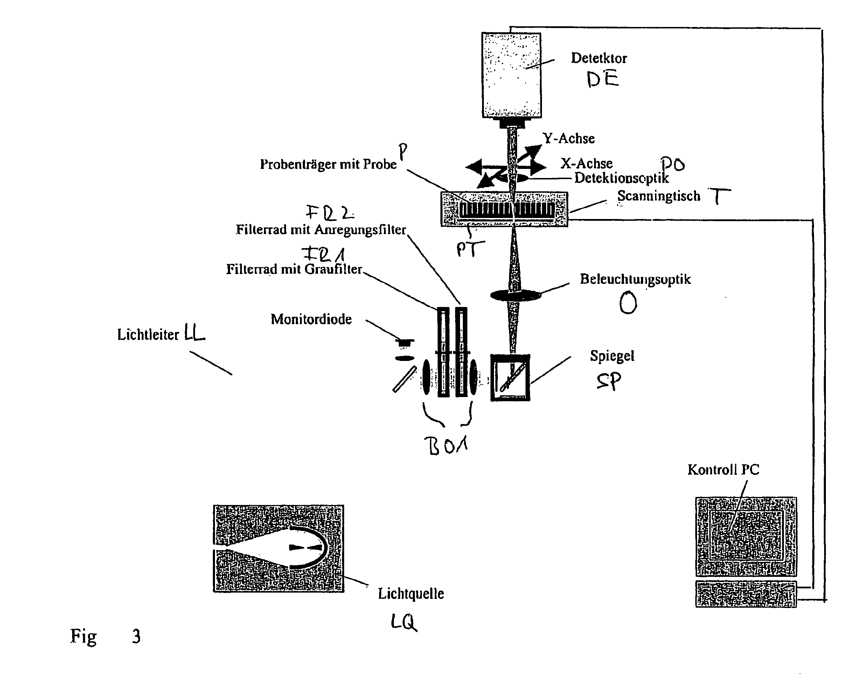

Abb 2 ist ein Ausführungsbeispiel für Fluoreszenz und Lumineszenzmessung, Abb. 3 ein Beispiel für Absorptionsmessungen.

Hier ist die Detektoranordnung DE über der Probe angeordnet.

Statt des Strahlteilers DST ist hier beispielsweise ein Spiegel SP vorgesehen, über den das Beleuchtungslicht seitlich in Richtung der MTP eingekoppelt wird.

Zumindest der Detektor und die Ansteuerung des Scanning- Tisches sind mit einem PC verbunden, der mit weiteren Einstell- oder Auswertelementen verbunden sein kann.

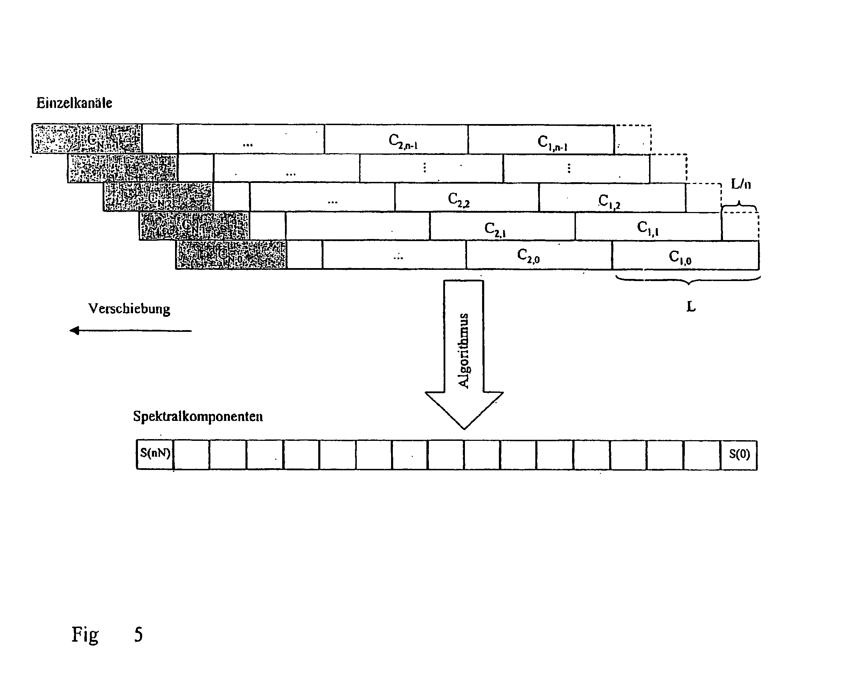

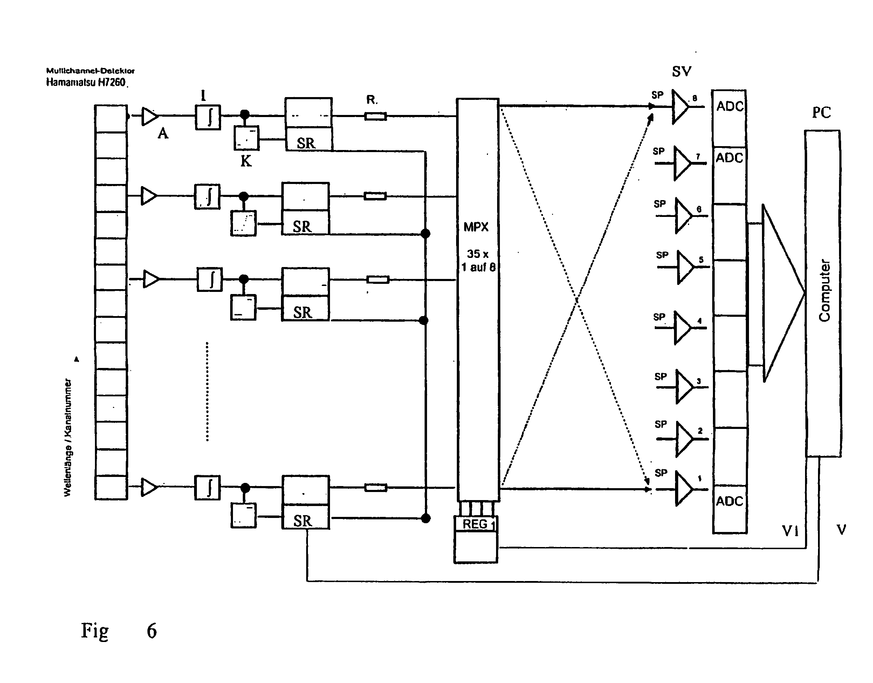

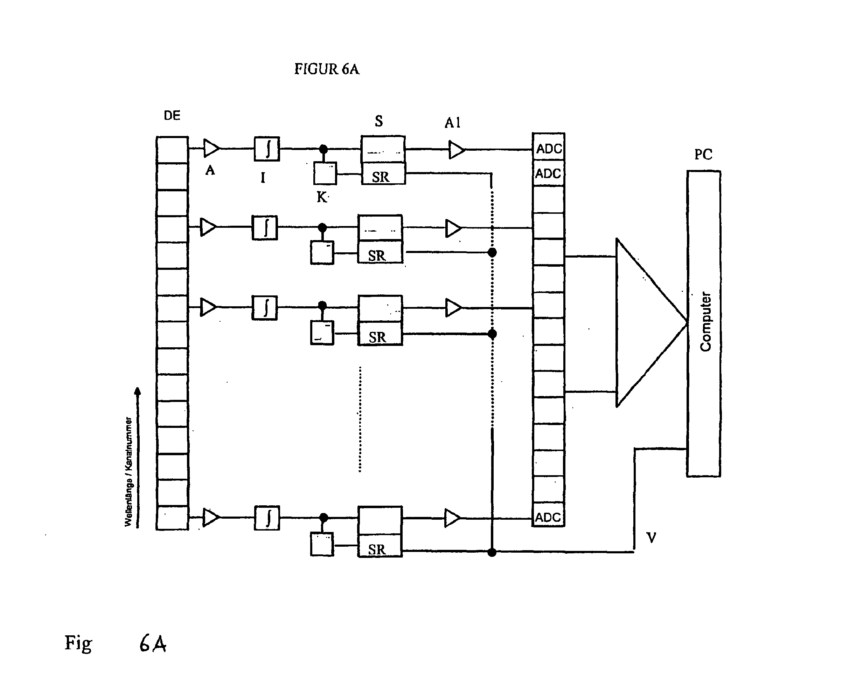

Zus Detektionsanordnung DE kann eine Auswerteanordnung gehören, wie sie im Folgenden , insbes. Anhand Fig. 5 und 6, detailliert dargestellt ist.

**2.3.1 Beschreibung der Detektionseinheit**

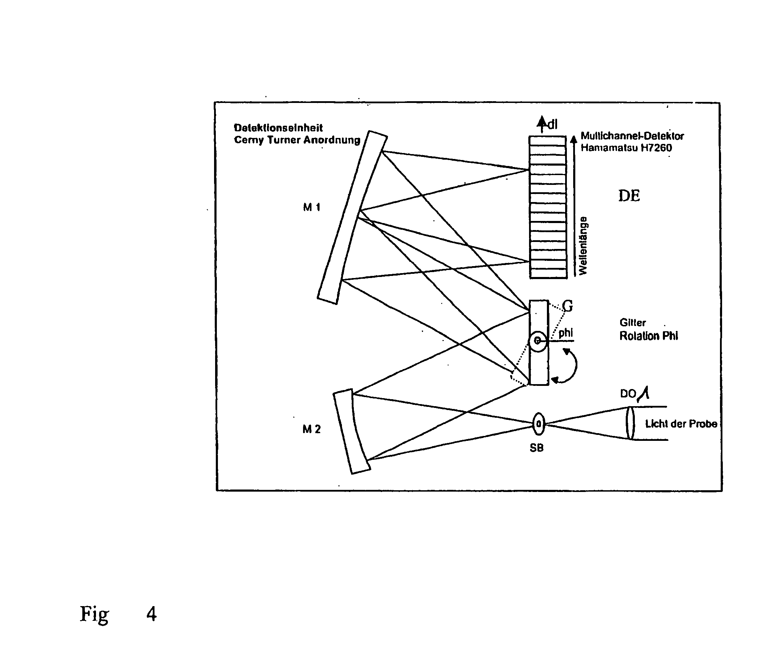

Eine mögliche Ausführungsform des optischen Strahlenganges der in Abb. 1 im Blockschaltbild gezeigten Detektoreinheit ist in Abb. 4 dargestellt. Der Aufbau beschreibt im wesentlichen einen Cerny Turner Aufbau. Das Licht L der Probe wird mit der Detektionsoptik DO1, die das parallele Licht der DO in Fig. 2,3 aufnimmt , fokussiert. Eine Steulichtblende SB kann verwendet werden ist aber nicht unbedingt erforderlich .

Der erste abbildende Spiegel M2 kollimiert das Fluoreszenzlicht. Anschließend trifft das Licht auf ein Liniengitter G, beispielsweise ein Gitter mit einer Linienzahl von 651 Linien pro mm Das Gitter beugt das Licht entsprechend seiner Wellenlänge in verschiedene Richtungen. Der zweite abbildende Spiegel M1 fokussiert die einzelnen spektral aufgespaltenen Wellenlängenanteile auf die entsprechenden Kanäle des Zeilendetektors DE . Besonders vorteilhaft ist der Einsatz eines Zeilen-Sekundärelektronenvervielfachers der Firma Hamamatsu H7260. Der Detektor besitzt 32 Kanäle und eine hohe Empfindlichkeit. Der freie Spektralbereich der oben beschriebenen Ausführungsform beträgt etwa 350 nm. Der freie Spektralbereich wird in dieser Anordnung gleichmäßig auf die 32 Kanäle des Zeilendetektors verteilt, wodurch sich eine optische Auflösung von etwa 10 nm ergibt. Somit ist diese Anordnung nur bedingt zur Spektroskopie geeignet. Jedoch ist ihr Einsatz in einem schnellen Screening System vorteilhaft, da das Signal pro Detektionskanal aufgrund des relativ breiten detektierten Spektralbandes noch relativ groß ist. Eine Verschiebung des freien Spektralbereiches kann zusätzlich durch eine Verdrehung um phi beispielsweise des Gitters erfolgen und/oder durch eine Verschiebung des Zeilenempfängers in Richtung der Wellänlängenaufspaltung um dl (siehe Abb. 4).

In den oben beschriebenen Ausführungsform(en) detektiert jeder Einzelkanal vorteilhaft ein Spektralband des Emissionsspektrums mit einer spektralen Breite von ca. 10 nm. Die Emission der für die Analyse relevanten Farbstoffe erstreckt sich jedoch über einen Wellenlängenbereich von mehreren 100 nm. Deshalb erfolgt in der erfindungsgemäßen Anordnung eine Summation der Einzelkanäle entsprechend der Fluoreszenzbänder der verwendeten Farbstoffe. Hierzu wird im ersten Schritt ein so genannter Spektralscan an einer auf der MTP befindlichen Referenzprobe, der die Informationen der Einzelkanäle z.B. als Bildinformation ausliest. Können nicht alle Einzelkanäle des Detektor simultan ausgelesen werden, so erfolgt nach dem Stand ein sequentielles Auslesen der Einzelkanäle (Multiplexen).

Hierbei wird die Probe vorteilhaft mit mehreren Anregungswellenlängen gleichzeitig entsprechend der verwendeten Farbstoffe bestrahlt. So wird die Summe der Spektralkomponenten der einzelnen Farbstoffe, die sich in der gemessenen Probe befinden, aufgezeichnet.

Im Anschluß kann der Nutzer beliebig die einzelnen Kanäle zu Detektionsbändern (Emissionsbändem) zusammenfassen , also aufsummieren. Die Auswahl der Summationsbreiche kann beispielsweise durch die Darstellung der Signale der Probe in den Einzelkanälen in einem Histogramm erfolgen. Das Histogramm repräsentiert die Summe aller Emissionsspektren der in der Probe verwendeten Farbstoffe. Diese Summation erfolgt vorteilhaft entsprechend den Emissionsspektren der angeregten Farbstoffe, wobei die jeweiligen Anregungswellenlängen ausgeblendet und Signale verschiedener Farbstoffe in verschiedenen Detektionsbändern summiert werden.

Können beispielsweise 8 Kanäle simultan ausgelesen werden, so erfolgt bei Verwendung des oben beschriebenen 32 Kanaldetektors eine Summation über jeweils 4 Kanäle. Das Auslesen der gesamten N=32 Kanäle erfolgt, dann in n=4 Schritten, wobei das Summationsfenster um jeweils einen Einzelkanal (L/n=4/4=1) verschoben wird. Abb. 5 zeigt schematisch jeweils in einer Zeile die verschiedenen Einzelkanäle des Zeilendetektors, deren N Einzelsignale C entsprechen. Dieses Vorgehen hat gegenüber dem Auslesen der 32 Einzelkanäle in 4 Schritten den Vorteil das die Signalinformation aller 32 Pixel für die Meßzeit in die Berechnung der einzelnen Spektralwerte eingeht. Im anderen Fall wird jeder Detektorkanal nur für 1/4 der Messzeit ausgelesen. Im Folgenden wird beschrieben wie sich aus den Summen über die Detektorkanäle die einzelnen Spektralwerte wieder gewinnen lassen

Die gemessenen Signale der Einzelkanäle werden mit $c_{k,j}$ (in Abb. 5 als Blöcke dargestellt) bezeichnet, wobei $k = 1..N$ die Kanalnummer und $j = 0..n-1$ die Vielfachen der Verschiebung Un sind. Fällt das Signal am Rand des Detektors nicht ab, so kann wie in Abb. 5 grau dargestellt, der letzte Einzelkanal des Detektors so abgedeckt (ausgeblendet) werden, dass nur eine Breite von Un zur Messung zur Verfügung steht. Dies ist zur Vermeidung von Artefakten bei der Berechnung notwendig.

Zur Berechnung der N mal n Spektralwerte $S_m$ werden nun Differenzen von Summen über Einzelkanäle nach folgendem Algorithmus gebildet:

$$S_1 = c_{1,0}' = \sum_{i=1}^{N} c_{i,0} - \sum_{i=1}^{N-1} c_{i,1}$$

$$S_2 = c_{1,1}' = \sum_{i=1}^{N} c_{i,1} - \sum_{i=1}^{N-1} c_{i,2}$$

....

$$S_{n-1} = c_{1,n-2}' = \sum_{i=1}^{N} c_{i,n-2} - \sum_{i=1}^{N-1} c_{i,n-1}$$

$$S_n = c_{1,n-1}' = \sum_{i=1}^{N-1} c_{i,n-1} - \sum_{i=2}^{N} c_{i,0} - \sum_{m=1}^{n-2} c_{N,m}$$

....

$$S_{k \cdot n+1} = c_{k,0}' = \sum_{i=k}^{N} c_{i,0} - \sum_{i=k}^{N-1} c_{i,1}$$

$$S_{k \cdot n+2} = c_{k,1}' = \sum_{i=k}^{N} c_{i,1} - \sum_{i=k}^{N-1} c_{i,2}$$

....

$$S_{k \cdot n+j+1} = c_{k,j}' = \sum_{i=k}^{N} c_{i,j} - \sum_{i=k}^{N-1} c_{i,j+1}$$

....

$$S_{(k+1)n-1} = c_{k,n-2}' = \sum_{i=k}^{N} c_{i,n-2} - \sum_{i=k}^{N-1} c_{i,n-1}$$

$$S_{(k+1)n} = c_{k,n-1}' = \sum_{i=k}^{N-1} c_{i,n-1} - \sum_{i=k+1}^{N-1} c_{i,0} - \sum_{m=1}^{n-2} c_{N,m}$$

....

$$S_{N \cdot n-n} = c_{N,0}' = c_{N,0}$$

$$S_{N \cdot n - n + 1} = c'_{N,1} = c_{N,1}$$

....

$$S_{N \cdot n} = c'_{N,n-1} = c_{N,n-1}$$

Die so berechneten Spektralwerte S (Zwischenwerte) können im Anschluß graphisch auf dem angezeigten Bild, z.B. während eines Spektralscans dargestellt werden.

Die Summation über verschiedene Einzelkanäle und damit die Messung der $c_{k,j}$ ist in Abb. 6 schematisch dargestellt. Die Signale der Einzelkanäle werden hierbei wiederum mit einem Verstärker A in Spannungssignale transformiert. Anschließend werden die einzelnen Spannungssignale in einem Integrator I während der Pixelverweilzeit aufintegriert.

**2.3.2 Simultane Aufnahme der vorgewählten Spektralregionen**

Die Berechnung der Emissionsbänder kann digital oder auch analog erfolgen. Beide Anordnungen werden im folgenden näher beschrieben. Eine Anordnung zur digitalen Berechnung des Summensignals ist in Abb. 6A schematisch dargestellt. Hierbei wird der an den Anoden eines Mehrkanal-PMT fließende Strom, jeweils durch den ersten Amplifier A (als Strom-Spannungswandler geschaltet) in eine Spannung gewandelt und verstärkt. Die Spannung wird einem Integrator 1 zugeführt der über eine entsprechende Zeit (z.B. Pixelverweilzeit) das Signal integriert.

Zur schnelleren Auswertung kann dem Integrator 1 ein Komparator K nachgeschaltet werden, der als einfacher Komparator eine Schaltschwelle hat, die bei Überschreitung ein digitales Ausgangssignal erzeugt oder der als Fensterkomparator ausgebildet ist und dann ein digitales Ausgangssignal bildet, wenn sich das Eingangssignal zwischen der oberen und unteren Schaltschwelle befindet oder wenn das Eingangssignal außerhalb (unter oder über) den Schaltschwellen liegt. Die Anordnung des Komparators bzw. des Fensterkomparators kann sowohl vor dem Integrator als auch danach erfolgen. Schaltungsanordnungen ohne Integrator (so genannte Verstärkermode) sind ebenfalls denkbar. Bei der Anordnung im Verstärkermode ist weiterhin der Komparator K auch nach entsprechender Pegelanpassung vorhanden. Der Ausgang des Komparators K dient als Steuersignal für ein Switch-Register SR , das direkt die aktiven Kanäle schaltet (online) oder der Zustand wird dem Computer über eine zusätzliche Verbindung V mitgeteilt, um eine individuelle Auswahl der aktiven Kanäle zu treffen (off-line). Das Ausgangssignal des Switch-Registers SRwird direkt einem weiteren Verstärker A1 zur Pegelanpassung, für die nachfolgende A/D-Wandlung AD zugeführt. Die AD gewandelten Werte werden über geeignete Datenübertragung an einen Rechner (PC oder Digital-Signal-Prozessor DSP) übertragen, der die Berechnung des /der Summensignale(s) durchführt.

Ein auf analoger Datenverarbeitung basierendes Aquivalent der Anordnung in Abb. 6A ist in Abb. 6 dargestellt. Die Signale der Einzelkanäle werden hierbei wiederum mit einem Verstärker A in Spannungssignale transformiert. Anschließend werden die einzelnen Spannungssignale in einem Integrator I während der Pixelverweilzeit aufintegriert.

Dem Integrator nachgeschaltet ist ein Komparator K der einen Vergleich des aufintegrierten Signals mit einem Referenzsignal durchführt.

Falls das aufintegrierte Signal kleiner als die Komparatorschwelle ist, so würde in dem entsprechenden Einzelkanal kein oder ein zu kleines Fluoreszenzsignal gemessen. In einem solchen Falle soll das Signal des Einzelkanals nicht weiter verarbeitet werden, da dieser Kanal nur einen Rauschanteil zum Gesamtsignal beiträgt. Der Komparator betätigt in einem solchen Falle über SR einen Schalter und der Einzelkanal wird für den gerade gemessenen Pixel ausgeschalten. Mit Hilfe der Komparatoren in Kombination mit den Schaltern wird also automatisch der für den gerade gemessenen Bildpunkt relevante Spektralbereich ausgewählt.

Im Anschluß kann das integrierte Spannungssignal der Einzelkanäle mit einem mit dem Switch-Register SR verbundenen Demultiplexer MPX auf verschiedene

Summenpunkte durch das Register Reg1 geschaltet werden. In Abb. 6 sind 8 verschiedene Summenpunkte SP eingezeichnet. Die Steuerung des Registers Reg1 erfolgt durch eine Steuerleitung V1 vom Rechner. Jeweils ein Summenpunkt SP bildet jeweils einen Teil des Summationsverstärkers SV, der die Summation der angewählten Einzelkanäle durchführt. Insgesamt sind in Abb. 6 8 Summenverstärker SV dargestellt. Die Summensignale werden im Anschluß mit jeweils einem Analog-Digital-Wandler in digitale Signale umgewandelt und vom Computer oder DSP weiterverarbeitet. Die Summenverstärker SV können auch mit einer veränderlichen nichtlinearen Kennlinie betrieben.

In einer weiteren Anordnung (digitale (nach Abb. 6A) und analoge Detektion (nach Abb. 6)) erfolgt eine Manipulation bzw. Verzerrung der Eingangssignale der Einzeldetektionskanäle durch: eine Veränderung der Verstärkung von (A), eine Veränderung der Integrationszeiten von (I), durch ein Einspeisen eines zusätzlichen Offsets vor dem Integrator und/oder durch eine digitale Beeinflußung der gezählten Photonen bei einer Photonenzählanordnung. Beide Methoden können auch beliebig miteinander kombiniert werden.

Eine Änderung des Summationsmusters durch V1 kann bildweise nach der Aufnahme oder während des Scannens eines Bildpunktes / Probenpunktes bzw. einer Bildzeile / -spalte erfolgen. Die Anfordungen an die Schaltgeschwindigkeit des MPX hängen von der Art der Einstellung ab. Erfolgt beispielsweise eine bildpunktweise Einstellung so muß der Scan innerhalb der Integrationszeit für diesen Bildpunkt erfolgen (also in einigen Mikrosekunden). Erfolgt die Einstellung bildweise so muß die Scan innerhalb von einigen Millisekungen bis Sekunden erfolgen.

Die Berechnung der Signale der Einzelkanäle erfolgt mit dem oben beschriebenen Algorithmus unter Verwendung der $c_{k,j}$.

Mit der erfindungsgemäßen Anordnung ist ein schneller Wechsel der Detektionsbänder für Multitracking - Anwendungen, d.h. für einen Wechsel der Bestrahlungswellenlänge und/ oder Intensität während der Messung möglich. Der Wechsel kann in einem Zeitraum von einigen μs. Dadurch ist beispielsweise auch die Untersuchung einund der selben Probenstelle mit unterschiedlichen Detektionsbändern möglich. Messungen, die schnelle Wechsel des Anregungslichtes durch Polychomatoren oder Laser mit AOF erfordern lassen sich durch diesen schnellen Wechsel der Detektionsbänder realisieren

Die Anordnung nach Abb. 6 hat gegenüber Anordnung nach Abb. 6A mehrere Vorteile. Der auffälligste Vorteil ist, dass lediglich die Summenkanäle (also die Detektionsbänder der verwendeten Farbstoffe) in digitale Daten gewandelt und an den Computer gesendet werden müssen. Dadurch werden die vom Computer zu verarbeitenden Datenraten minimiert. Dies ist besonders wichtig bei der Anwendung des Verfahrens bei schnellen Kinetiken im ms Bereich, um die extrem schnell ablaufenden dynamischen Prozesse registrieren zu können. Beim Einsatz dieses Verfahrens sind weiterhin keine Grenzen an die Anzahl der Einzelkanäle des verwendeten Zeilendetektor und damit an die Größe des detektierbaren Spektralbereiches und/oder die spektrale Auflösung des Spektralsensors gesetzt.

Weiterhin sind bei der in Abb. 6A dargestellten Vorrichtung die zu wandelnden Signalpegel wesentlich kleiner. Dadurch ist das zu erwartende Signal zu Rauschverhältnis geringer.

In den beide oben beschriebenen Anordnungen wurde vorzugsweise eine Integratorschaltung zur Detektion der Einzelkanalsignale verwendet. Uneingeschränkt kann jedoch auch eine Photonenzählung in den Einzelkanälen erfolgen und die Photonenzahlen addiert werden.

**Patentansprüche**

1. Verfahren zur Identifikation von fluoreszierenden, lumineszierenden und/oder absorbierenden Substanzen bei der Analyse von Proben, wobei die Proben in Mikrotiterplatten (MTP) sequentiell vermessen werden, **dadurch gekennzeichnet, dass** eine spektrale Aufspaltung des Probenlichtes sowie eine Detektion in mehreren Detektionskanälen erfolgt, wobei jeder Einzelkanal ein Spektralband des Emissionsspektrums detektiert, und für mindestens einen Teil der Detektionskanäle mindestens eine Summation und/oder Zusammenführung der Signale der Einzelkanäle erfolgt.

2. Verfahren nach Anspruch 1, wobei in einem ersten Schritt ein Spektrum mindestens einer Standardprobe (STD) aufgenommen wird.

3. Verfahren nach einem der vorangehenden Ansprüche, wobei automatisch oder durch Eingabemittel, vorzugsweise anhand gemessener Standardspektren, interessierende Spektralbereiche (SRI) festgelegt werden, in denen eine Messung erfolgt.

4. Verfahren nach einem der vorangehenden Ansprüche, wobei die Detektionskanäle mindestens eines interessierenden Spektralbereiches (SRI) summiert werden.

5. Verfahren nach einem der vorangehenden Ansprüche, wobei eine Veränderung der Bereiche summierter Detektionskanäle und/oder ein Abschalten einzelner Detektionskanäle oder Kanalgruppen erfolgt.

6. Verfahren nach einem der vorangehenden Ansprüche, wobei eine relative Signalintensität der Substanz aus dem Quotienten (PRB-BLK) / (STD-BLK) ermittelt wird,

mit PRB: gemessenes Signal der Substanz
STD: gemessenes Signal Standardprobe BLK: Gemessenes Signal Untergrund (Leerprobe).

7. Verfahren nach einem der vorangehenden Ansprüche,
   wobei für STD und / oder BLK eine Mittelwertbildung über mehrere Proben erfolgt.

8. Verfahren nach einem der vorangehenden Ansprüche,
   wobei für mindestens eine Substanz anhand von Standardproben ein spektrales unmixing nach mindestens zwei Komponenten erfolgt.

9. Verfahren nach einem der vorangehenden Ansprüche,
   wobei durch unmixing das Verhältnis mindestens zweier Komponenten gebildet wird.

10. Verfahren nach einem der vorangehenden Ansprüche,
    wobei die spektrale Aufspaltung durch ein dispersives Element, vorzugsweise ein Gitter oder Prisma erfolgt und die Detektion durch eine in mindestens eine Richtung ortsauflösende Empfängeranordnung erfolgt.

11. Verfahren nach einem der vorangehenden Ansprüche,
    wobei die Detektion durch einen Zeilendetektor erfolgt.

12. Verfahren nach einem der vorangehenden Ansprüche,
    wobei die Detektion durch einen Mehrkanal - PMT erfolgt.

13. Verfahren nach einem der vorangehenden Ansprüche,
    wobei eine spektrale Wichtung zwischen mehreren Detektionskanälen, eine Summation der gewichteten Kanäle der Signale der Detektionskanäle sowie eine Summation der Detektionskanäle erfolgt.

14. Verfahren nach einem der vorangehenden Ansprüche,
    wobei die Wichtungskurve eine Gerade ist.

15. Verfahren nach einem der vorangehenden Ansprüche,
    wobei Signale von Detektionskanälen gewandelt und digital ausgelesen werden und die Wichtung und Summation digital in einem Rechner erfolgt.

16. Verfahren nach einem der vorangehenden Ansprüche,
    wobei die Wichtung und Summation mit analoger Datenverarbeitung mittels einer Widerstandskaskade erfolgt.

17. Verfahren nach einem der vorangehenden Ansprüche,
    wobei die Widerstände einstellbar sind.

18. Verfahren nach einem der vorangehenden Ansprüche,
    wobei die Wichtungskurve einstellbar ist.


**Claims**

1. Method of identifying fluorescing, luminescing and/or absorbing substances in the analysis of samples, wherein the samples are measured sequentially in microtiter plates,
   **characterised in that**
   spectral splitting of the sample light and a detection in several detection channels are performed, wherein each individual channel detects a spectral band of the emission spectrum,
   and at least one summation and/or combination of the signals of the individual channels is performed for at least a portion of the detection channels.

2. Method as claimed in claim 1, wherein a spectrum of at least one standard sample (STD) is recorded in a first step.

3. Method as claimed in any one of the preceding claims,
   wherein spectral regions of interest (SRI), in which a measurement is performed, are determined automatically or by input means, preferably on the basis of measured standard spectra.

**4.** Method as claimed in any one of the preceding claims,
wherein the detection channels of at least one spectral region of interest (SRI) are summed.

**5.** Method as claimed in any one of the preceding claims,
wherein the regions of summed detection channels are changed and/or individual detection channels or groups of channels are switched off.

**6.** Method as claimed in any one of the preceding claims,
wherein a relative signal intensity of the substance is determined from the quotient (PRB-BLK) / (STD-BLK),
where PRB is the measured signal of the substance,
STD is the measured signal of the standard sample,
BLK is the measured signal of the background (blank sample).

**7.** Method as claimed in any one of the preceding claims,
wherein for STD and/or BLK an average value is formed over several samples.

**8.** Method as claimed in any one of the preceding claims
wherein spectral unmixing according to at least two components is performed for at least one substance on the basis of standard samples.

**9.** Method as claimed in any one of the preceding claims,
wherein the ratio of at least two components is formed by unmixing.

**10.** Method as claimed in any one of the preceding claims,
wherein spectral splitting is performed by means of a dispersive element, preferably a grating or prism, and the detection is performed by means of receiver arrangement which is spatially resolving in at least one direction.

**11.** Method as claimed in any one of the preceding claims,
wherein the detection is performed by means of a line detector.

**12.** Method as claimed in any one of the preceding claims,
wherein the detection is performed by means of a multi-channel - PMT.

**13.** Method as claimed in any one of the preceding claims,
wherein spectral weighting is performed between several detection channels, the weighted channels of the signals of the detection channels are summed and the detection channels are summed.

**14.** Method as claimed in any one of the preceding claims,
wherein the weighting curve is a straight line.

**15.** Method as claimed in any one of the preceding claims,
wherein signals of detection channels are converted and digitally read out, and the weighting and summation are performed digitally in a computer.

**16.** Method as claimed in any one of the preceding claims,
wherein the weighting and summation are performed with analogue data processing by means of a resistor cascade.

**17.** Method as claimed in any one of the preceding claims,
wherein the resistors are adjustable.

**18.** Method as claimed in any one of the preceding claims, wherein the weighting curve is adjustable.

**Revendications**

**1.** Procédé pour identifier des substances fluorescentes, luminescentes et/ou absorbantes lors de l'analyse d'échantillons, où les échantillons sont mesurés séquentiellement dans des plateaux de micro-titrage (MTP), **caractérisé en ce qu'**une décomposition spectrale de la lumière d'échantillon ainsi qu'une détection a lieu dans plusieurs canaux de détection, où chaque canal individuel détecte une bande spectrale du spectre d'émission, et pour au moins une partie de canaux de détection, au moins une addition et/ou réunion des signaux des canaux individuels a lieu.

2. Procédé selon la revendication 1, où lors d'une première étape, un spectre d'au moins un échantillon standard (STD) est enregistré.

3. Procédé selon l'une des revendications précédentes, où sont fixées automatiquement ou par des moyens d'entrée, de préférence à l'aide de spectres standard mesurés, des zones spectrales d'intérêt (SRI), dans lesquels a lieu une mesure.

4. Procédé selon l'une des revendications précédentes, où les canaux de détection d'au moins une zone spectrale d'intérêt (SRI) sont additionnés

5. Procédé selon l'une des revendications précédentes, où a lieu une modification des zones de canaux de détection additionnés et/ou une mise hors service de canaux de détection individuels ou de groupes de canaux.

6. Procédé selon l'une des revendications précédentes, où est déterminée une intensité de signal relative de la substance à partir du quotient (PRB-BLK) / STD-BLK),

   avec PRB: signal mesuré de la substance
   STD: signal mesuré échantillon standard
   BLK: signal mesuré fond (échantillon à vide).

7. Procédé selon l'une des revendications précédentes, où une formation de valeur moyenne de plusieurs échantillons a lieu pour STD et/ou BLK.

8. Procédé selon l'une des revendications précédentes, où est effectué pour au moins une substance à l'aide d'échantillons standard un mélange spectral selon au moins deux composantes.

9. Procédé selon l'une des revendications précédentes, où par le mélange est formé le rapport entre au moins deux composantes.

10. Procédé selon l'une des revendications précédentes, où la décomposition spectrale a lieu par un élément dispersif, de préférence un réseau ou un prisme, et la détection a lieu par un agencement de réception à résolution spatiale dans au moins une direction.

11. Procédé selon l'une des revendications précédentes, où la détection a lieu par un groupement de détecteurs disposés en ligne(s).

12. Procédé selon l'une des revendications précédentes, où la détection a lieu par un pluri-canal-PMT.

13. Procédé selon l'une des revendications précédentes, où a lieu une pondération spectrale entre plusieurs canaux de détection, une addition des canaux pondérés des signaux des canaux de détection et une addition des canaux de détection.

14. Procédé selon l'une des revendications précédentes, où la courbe de pondération est une droite.

15. Procédé selon l'une des revendications précédentes, où les signaux de canaux de détection sont transformés et sélectionnés de manière numérique, et la pondération et l'addition a lieu d'une manière numérique dans un calculateur.

16. Procédé selon l'une des revendications précédentes, où la pondération et l'addition a lieu par un traitement de données numérique à l'aide de résistances en cascade.

17. Procédé selon l'une des revendications précédentes, où les résistances sont réglables.

**18.** Procédé selon l'une des revendications précédentes, où la courbe de pondération est réglable.

**Komponenten Meswerterfassung**

**1a Signalanregung bei ABS**

**1b Signalanregung bei FL**

**1c Signaldetektion bei ABS, FL, LUM**

Fig    1

EP 1 461 600 B1

Fig 2

Detetktor
DE

Y-Achse

Probenträger mit Probe P

X-Achse PO

Detektionsoptik

Scanningtisch T

F 2 2
Filterrad mit Anregungsfilter

F 2 1
Filterrad mit Graufilter

PT

Beleuchtungsoptik
O

Monitordiode

Lichtleiter LL

Spiegel
SP

B O 1

Kontroll PC

Lichtquelle
LQ

Fig    3

Fig 4

Fig 5

Fig 6

FIGUR 6A

Fig 6A

Fig    7

EP 1 461 600 B1

Zu Beginn des Assays:

| |
|---|
| Aufzeichnung des Spektrums an einem / mehreren STD |

⬇

| |
|---|
| Festlegung der SRIs |

⬇

Bei jeder Mikroplatte:

| |
|---|
| Messeung aller Proben eines Probensatzes <br> = a x b Datenpunke mit je n SRIs |

⬇

| |
|---|
| Bestimmung der Mittlewerte der SRIs für STD und BLK |

⬇

| |
|---|
| Bestimmung von STD-BLK / PRB - BLK <br> für alle SRIs und alle Messwerte des Datensatzes |

⬇

| |
|---|
| Speicherung / Darstellung der Messwerte |

Fig 8

Messeung aller Proben eines Probensatzes
= a x b Datenpunke mit je n Spektralwerten

⬇

Bestimmung der Spektralwerte für STD und BLK
durch Mittelwertbildung

⬇

Spektrales Unmixing für alle( PRB-BLK)$_i$ nach
2 Komponenten unter Verwendung von (STD -BLK)
= Datensatz mit spezifischen (SP$_i$) und unspezifischem Anteil(US$_i$)

⬇

Speicherung / Darstellung der Sp$_i$, US$_i$

Fig    9

EP 1 461 600 B1

Fig 10

EP 1 461 600 B1

A.)

B.)

Fig 11

Fig 12

**EP 1 461 600 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19748211 A
- WO 0102846 A

- EP 0723146 A


**In der Beschreibung aufgeführte Nicht-Patentliteratur**

- High Throughput Screeening: the discovery of bioactive substances. Marcel Dekker Inc, 1997
- **MIYAWAKI et al.** *Proc Natl Acad Sci USA,* Marz 1999, vol. 96, 2135-2140

- High Throughput Screeening: the discovery of bioactive substances. Marcel Dekker Inc, 1997, 357
- **LANSFORD et al.** *Journal of Biomedical Optics,* Juli 2001, vol. 6 (3), 311-318
- **I.T. JOLIFFE.** Principal Component Analysis. Springer-Verlag, 1986